(19) Europäisches Patentamt
European Patent Office
Office européen des brevets

(11) **EP 3 032 194 A1**

(12) **EUROPEAN PATENT APPLICATION**

(43) Date of publication:
**15.06.2016 Bulletin 2016/24**

(51) Int Cl.:
**F25B 49/02** *(2006.01)*

(21) Application number: **14197575.5**

(22) Date of filing: **12.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Danfoss A/S
6430 Nordborg (DK)**

(72) Inventor: **Izadi-Zamanabadi, Roozbeh
6400 Sønderborg (DK)**

(54) **A method for controlling a supply of refrigerant to an evaporator including calculating a reference temperature**

(57)     A method for controlling a supply of refrigerant to an evaporator (2) of a vapour compression system (1) is disclosed. During a system identification phase an opening degree (12) of the expansion valve (3) is alternatingly increased and decreased, and a maximum temperature difference, $(S_4\text{-}S_2)_{max}$, between temperature, $S_4$, of air flowing away from the evaporator (2) and temperature, $S_2$, of refrigerant leaving the evaporator (2) is determined. During normal operation, the supply of refrigerant to the evaporator (2) is controlled by calculating a reference temperature, $S_{2,ref}$, based on the monitored temperature, $S_4$, and the maximum temperature difference, $(S_4\text{-}S_2)_{max}$, determined during the system identification phase. The supply of refrigerant to the evaporator (2) is controlled in order to obtain a temperature, $S_2$, of refrigerant leaving the evaporator (2) which is substantially equal to the calculated reference temperature, $S_{2,ref}$.

Fig. 1

EP 3 032 194 A1

**Description**

FIELD OF THE INVENTION

The present invention relates to a method for controlling a supply of refrigerant to an evaporator. More particularly, in the method of the invention the supply of refrigerant is controlled on the basis of a reference temperature, which has been calculated on the basis of temperature measurements.

BACKGROUND OF THE INVENTION

Vapour compression systems, such as refrigeration systems, air condition systems or heat pumps, normally comprise at least one compressor, at least one condenser, at least one expansion device, e.g. in the form of expansion valves, and at least one evaporator arranged along a refrigerant path. Refrigerant circulates the refrigerant path and is alternatingly expanded and compressed, and heat exchange takes place in the condensers and the evaporators. Expanded refrigerant enters the evaporators in a mixed state of gaseous and liquid refrigerant. As the refrigerant passes through the evaporators, it evaporates while exchanging heat with a secondary fluid flow, such as an air flow, across each evaporator. In order to utilise the potential refrigerating capacity of a given evaporator to a maximum extent, it is desirable that liquid refrigerant is present along the entire length of the evaporator. On the other hand, it is undesirable that liquid refrigerant passes through the evaporator and into the suction line, since it may cause damage to the compressors if liquid refrigerant reaches the compressors. It is therefore desirable to control the supply of refrigerant to the evaporators in such a manner that, in a given evaporator, the boundary between mixed phase refrigerant and gaseous refrigerant is exactly at the outlet of the evaporator.

In order to obtain this, the superheat of the refrigerant leaving the evaporators is often measured and/or calculated. The superheat is the difference between the temperature of the refrigerant leaving the evaporator and the dew point of the refrigerant leaving the evaporator. A low superheat value, thus, indicates that the temperature of the refrigerant leaving the evaporator is close to the dew point, while a high superheat value indicates that the temperature of refrigerant leaving the evaporator is significantly higher than the dew point, and that a significant part of the evaporator therefore contains gaseous refrigerant. In the part of the evaporator which contains gaseous refrigerant, the heat transfer between the ambient and the refrigerant flowing in the evaporator is significantly lower than in the part of the evaporator which contains a mixture of gaseous and liquid refrigerant. Therefore the overall efficiency of the evaporator is reduced when a significant part of the evaporator contains gaseous refrigerant. It is therefore attempted to control the supply of refrigerant to the evaporator in such a manner that the superheat value is maintained at a small, but positive, level.

WO 2012/052019 A1 describes a method for controlling a supply of refrigerant to an evaporator, in which the SH=0 point can be determined purely on the basis of a measured temperature signal. A component, such as an expansion valve, a fan or a compressor, is actuated in such a manner that a dry zone of the evaporator is changed. A temperature signal, representing a temperature of refrigerant leaving the evaporator is measured and analysed, e.g. including deriving a rate of change signal. Then a temperature value where a gain of a transfer function between the actuated component and the measured temperature signal drops from a maximum value to a minimum value is determined. The determined temperature value is defined as corresponding to a zero superheat value (SH=0).

DESCRIPTION OF THE INVENTION

It is an object of embodiments of the invention to provide a method for controlling a supply of refrigerant to an evaporator, in which a reference temperature can be calculated dynamically.

It is a further object of embodiments of the invention to provide a method for controlling a supply of refrigerant to an evaporator, in which an optimal superheat of refrigerant leaving the evaporator can be obtained, even if operating conditions change.

The invention provides a method for controlling a supply of refrigerant to an evaporator of a vapour compression system, the vapour compression system comprising at least one evaporator, at least one compressor, at least one condenser and at least one expansion valve arranged in a refrigerant path, the method comprising the steps of:

- initiating a system identification phase, in which an opening degree of the expansion valve is alternatingly increased and decreased,

- during the system identification phase, monitoring a temperature, $S_2$, of refrigerant leaving the evaporator, and a temperature, $S_4$, of air flowing across the evaporator, at a position where the air is flowing away from the evaporator, and determining a maximum temperature difference, $(S_4-S_2)_{max}$, between the monitored temperatures,

- upon completion of the system identification phase, controlling a supply of refrigerant to the evaporator by:

    - monitoring the temperature, $S_2$, of refrigerant leaving the evaporator, and the temperature, $S_4$, of air flowing away from the evaporator,

    - calculating a reference temperature, $S_{2,ref}$,

based on the monitored temperature, $S_4$, of air flowing away from the evaporator and the maximum temperature difference, $(S_4-S_2)_{max}$, determined during the system identification phase, and

- controlling the supply of refrigerant to the evaporator, based on the calculated reference temperature, $S_{2,ref}$, and in order to obtain a temperature, $S_2$, of refrigerant leaving the evaporator which is substantially equal to the calculated reference temperature, $S_{2,ref}$.

In the present context the term 'vapour compression system' should be interpreted to mean any system in which a flow of fluid medium, such as refrigerant, circulates and is alternatingly compressed and expanded, thereby providing either refrigeration or heating of a volume. Thus, the vapour compression system may be a refrigeration system, an air condition system, a heat pump, etc.

The vapour compression system comprises at least one evaporator, at least one compressor, at least one condenser, and at least one expansion valve. Thus, the vapour compression system may comprise only one of each of these components, or the vapour compression system may comprise two or more of any of these components. For instance, the vapour compression system may comprise a single compressor, or it may comprise two or more compressors, e.g. arranged in a compressor rack. Similarly, the vapour compression system may comprise only one evaporator, or it may comprise two or more evaporators. In the latter case each evaporator may be arranged to provide refrigeration for a separate refrigerated volume. The separate refrigerated volumes may, e.g., be separate display cases of a supermarket. In any event, each evaporator is preferably connected to a separate expansion valve which controls the supply of refrigerant to that evaporator, independently of the refrigerant supply to the other evaporators. Furthermore, an evaporator unit may comprise a single section, or two or more sections which may be connected in series or in parallel.

The method according to the invention is related to control of the supply of refrigerant to a single evaporator, via the corresponding expansion valve. However, this evaporator may very well be arranged in a vapour compression system comprising one or more additional evaporators, in which case the supply of refrigerant to these additional evaporators is controlled separately.

According to the method of the invention a system identification phase is first initiated. During the system identification phase an opening degree of the expansion valve is alternatingly increased and decreased, i.e. the opening degree of the expansion valve is modulated or pulsated. In the present context the term 'system identification phase' should be interpreted to mean a time period, in which various characteristics of the vapour compression system, such as dynamics of the vapour compression system, can be identified, in order to take such characteristics into account when operating the vapour compression system.

During the system identification phase, a temperature, $S_2$, of refrigerant leaving the evaporator, and a temperature, $S_4$, of air flowing across the evaporator, at a position where the air is flowing away from the evaporator, are monitored. The temperature, $S_2$, is related to the superheat of the refrigerant leaving the evaporator. The temperature, $S_4$, is a temperature of air flowing across the evaporator after heat exchange has taken place with refrigerant flowing through the evaporator, i.e. the air has been cooled by the evaporator. Accordingly, the temperature, $S_4$, reflects a temperature prevailing in a refrigerated volume, as well as the instantaneous cooling power of the evaporator, since a high cooling power will reduce this temperature.

The temperatures, $S_2$ and $S_4$, may, e.g., be measured by means of temperature sensors arranged at appropriate positions.

Based on the monitored temperatures, $S_2$ and $S_4$, a maximum temperature difference, $(S_4-S_2)_{max}$, between the monitored temperatures is determined. The alternating increases and decreases of the opening degree of the expansion valve during the system identification phase causes the monitored temperatures to alternatingly increase and decrease. However, the variations in the temperature, $S_2$, of refrigerant leaving the evaporator are expected to be larger than the variations in the temperature, $S_4$, of air flowing across the evaporator. Thereby the difference between the monitored temperatures, $S_2$ and $S_4$, varies across a period of increasing and decreasing the opening degree of the expansion valve. For each period, the maximum difference between the monitored temperatures is determined. Subsequently, the maximum temperature difference, $(S_4-S_2)_{max}$, is determined as the maximum value of the temperature differences determined for each of the periods.

Accordingly, the maximum temperature difference, $(S_4-S_2)_{max}$, provides information regarding how far the temperature, $S_2$, of refrigerant leaving the evaporator is from an optimal superheat value, under the given circumstances, and thereby information regarding how much further the temperature, $S_2$, can be lowered without risking flooding of the evaporator, i.e. that liquid refrigerant is allowed to pass through the evaporator. During the system identification phase the evaporator will be nearly flooded in several attempts or periods. The rational is to attempt to move the operating point to its expected, cold, region. When the evaporator is nearly flooded the temperature, $S_2$, of refrigerant leaving the evaporator approaches a level near the dew point temperature. In this case it provides a good estimate of the dew point temperature. At the same time the temperature, $S_4$, of air flowing away from the evaporator approaches its lowest possible level. The distance between the lowest $S_4$ value and the lowest $S_2$ value in the same period provides an estimated measure for the expected temperature difference between the refrigerant dew point and the $S_4$ measurements when the evaporator is almost filled with liquid refrigerant, and the refrigerated space is cooled down. This distance enables us to define a setpoint for the temperature, $S_2$, of refrigerant leaving the evaporator, which is appropriately close to the dew point temperature, while avoiding flooding of the evaporator.

Upon completion of the system identification phase, the supply of refrigerant to the evaporator is controlled in the following manner.

The temperature, $S_2$, of refrigerant leaving the evaporator and the temperature, $S_4$, of air flowing across the evaporator in a direction away from the evaporator are monitored, essentially as described above.

Then a reference temperature, $S_{2\,ref}$, is calculated, based on the monitored temperature, $S_4$, and the maximum temperature difference, $(S_4-S_2)_{max}$, which was determined during the system identification phase. Accordingly, the reference temperature, $S_{2,ref}$, is calculated dynamically during operation of the vapour compression system, including the control of the supply of refrigerant to the evaporator. Thus, if the monitored temperature, $S_4$, changes, then the calculated reference temperature, $S_{2,ref}$, changes accordingly. The temperature, $S_4$, is an appropriate parameter for this purpose, because, in steady state operation of the vapour compression system, the temperature, $S_4$, is the coldest signal, and variations in the temperature, $S_4$, are directly correlated to the dew point temperature of refrigerant leaving the evaporator. Thus, if the dew point temperature of refrigerant leaving the evaporator increases, then the temperature, $S_4$, of air flowing away from the evaporator also increases. Similarly, of the dew point temperature of refrigerant leaving the evaporator decreases, e.g. due to the suction pressure being lowered, then the temperature, $S_4$, of air flowing away from the evaporator also decreases.

Furthermore, since the reference temperature, $S_{2,ref}$, is calculated based on the maximum temperature difference, $(S_4-S_2)_{max}$, it also reflects how much further the temperature, $S_2$, of refrigerant leaving the evaporator can safely be decreased, as described above.

The step of calculating a reference temperature, $S_{2,ref}$, could, e.g., be performed using a calculator, which may, e.g., be or form part of a controller or a micro processor.

Finally, the supply of refrigerant to the evaporator is controlled, based on the calculated reference temperature, $S_{2,ref}$, and in order to obtain a temperature, $S_2$, of refrigerant leaving the evaporator which is substantially equal to the calculated reference temperature, $S_{2,ref}$. Thereby it is ensured that the supply of refrigerant to the evaporator is controlled in such a manner that a safe level of superheat of the refrigerant leaving the evaporator is maintained, without having to calculate the superheat value or measure the pressure of the refrigerant leaving the evaporator.

The step of calculating a reference temperature, $S_{2,ref}$, may comprise calculating a mean temperature, $\overline{S}_4$, of the temperature, $S_4$, of air flowing away from the evaporator, during a predefined previous time interval. According to this embodiment, a mean or average value of the temperature, $S_4$, is obtained during a time interval of a suitable length, and the obtained mean value is used for calculating the reference temperature, $S_{2,ref}$, instead of the instantaneously measured temperature, $S_4$. Thereby, the temperature value applied when the reference temperature, $S_{2,ref}$, is calculated represents a typical temperature prevailing in the air flowing across the evaporator, at a position where the air is flowing away from the evaporator, and any fluctuations or variations on a short time scale are not taken into account.

The predefined previous time period could, e.g., simply be a time period of a given length which has lapsed immediately before the current point in time. As an alternative, the predefined previous time period could be a previous night period or a previous day period. In this case, one mean temperature may be applied during the day time and another mean temperature may be applied during the night time.

The reference temperature, $S_{2,ref}$, may, in this case, be calculated as:

$$S_{2,ref} = \overline{S}_4 - (S_4 - S_2)_{max} + \Delta,$$

wherein $\Delta$ is a constant safety value.

According to this embodiment, the reference temperature, $S_{2,ref}$, is calculated as the difference between the mean value, $\overline{S}_4$, of the temperature of the air flowing away from the evaporator, and the maximum temperature difference, $(S_4-S_2)_{max}$, which was determined during the system identification phase. This will, in principle, provide a reference temperature, $S_{2,ref}$, which corresponds to a zero superheat value (SH=0). However, in order to provide a safety margin for the controlled temperature of refrigerant leaving the evaporator, thereby ensuring that the superheat value of the refrigerant leaving the evaporator does not become critically low, thereby risking that liquid refrigerant passes through the evaporator, the constant safety value, $\Delta$, is added. Thus, according to this embodiment, the supply of refrigerant to the evaporator is controlled in such a manner that an optimum superheat value of the refrigerant leaving the evaporator is obtained.

The step of controlling the supply of refrigerant to the evaporator may be performed using a proportional integral (PI) regulator. This is a standard component, and it provides a very easy way of controlling the vapour compression system. The calculated reference temperature, $S_{2,ref}$, and the measured temperature, $S_2$, of the refrigerant leaving the evaporator are supplied to the PI regulator, and based thereon the supply of refrigerant to the evaporator is controlled in such a manner that the supply of refrigerant is increased in the case that the measured temperature, $S_2$, is higher than the reference temperature, $S_{2,ref}$, and the supply of refrigerant is decreased in the case that the measured temperature, $S_2$, is lower than the reference temperature, $S_{2,ref}$.

As an alternative, other classical regulators could be applied.

The method may further comprise the steps of, during the system identification phase, determining one or more system dynamic parameters, supplying the system dynamic parameters to the proportional integral (PI) regulator, and designing the proportional integral (PI) regulator in accordance with the system dynamic parameters. According to this embodiment, the PI regulator is designed in accordance with actual information regarding the system dynamics. This ensures an accurate control of the supply of refrigerant to the evaporator.

The system dynamic parameters may, e.g., include various time constants, time delays and/or gains of the vapour compression system.

The step of controlling the supply of refrigerant to the evaporator may further comprise the steps of:

- obtaining an air temperature, $T_{air}$, of an air flow across the evaporator,

- comparing the obtained air temperature, $T_{air}$, to a reference value, $T_{air,ref}$, and

- controlling the supply of refrigerant to the evaporator on the basis of the comparing step, as well as on the basis of the calculated reference temperature, $S_{2,ref}$.

According to this embodiment, the supply of refrigerant to the evaporator is further controlled in order to obtain a desired temperature of the air flowing across the evaporator. This will typically correspond to a temperature of air inside a refrigerated volume. Accordingly, the supply of refrigerant to the evaporator is controlled in order to obtain a desired temperature inside a refrigerated volume.

The air temperature, $T_{air}$, may be the temperature of air flowing towards the evaporator, i.e. before the air is cooled the evaporator, the temperature of air flowing away from the evaporator, i.e. immediately after the air has been cooled by the evaporator, or a weighted value of the temperature of air flowing towards the evaporator and the temperature of air flowing away from the evaporator. Taking the air temperature into account in this manner ensures that the opening degree of the expansion valve, and thereby the supply of refrigerant to the evaporator, is varied in a smooth and continuous manner.

The supply of refrigerant to the evaporator may be controlled using a single PI regulator taking the temperature of refrigerant leaving the evaporator, as well as the air temperature into account.

BRIEF DESCRIPTION OF THE DRAWINGS

The invention will now be described in further detail with reference to the accompanying drawings in which

Fig. 1 is a diagrammatic view of a part of a vapour compression system for performing a method according to an embodiment of the invention,

Fig. 2 is a graph illustrating opening degree of an expansion valve and various temperature measurements during operation of a vapour compression system using a method according to an embodiment of the invention, and

Fig. 3 is a block diagram illustrating a method according to an embodiment of the invention.

DETAILED DESCRIPTION OF THE DRAWINGS

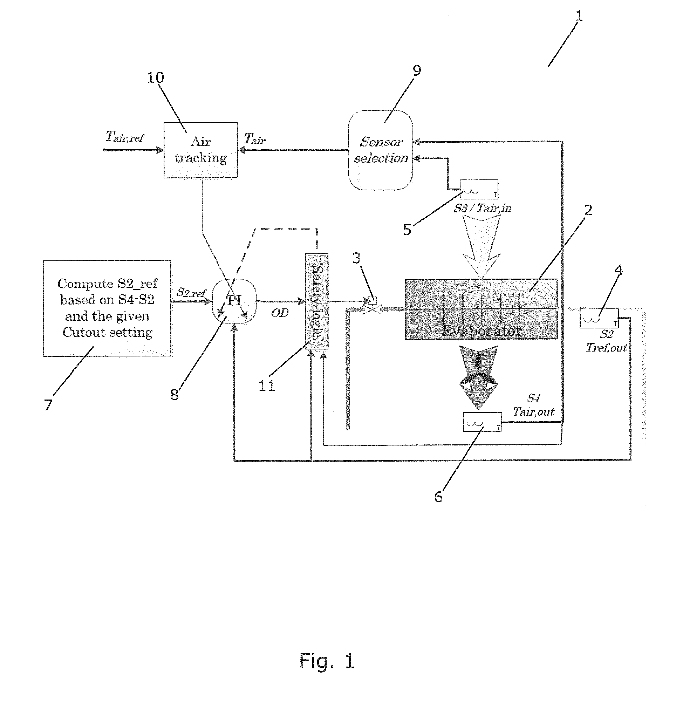

Fig. 1 is a diagrammatic view of a part of a vapour compression system 1 for performing a method according to an embodiment of the invention. The vapour compression system 1 comprises an evaporator 2 arranged in a refrigerant path along with one or more compressors (not shown) and one or more condensers (not shown). An expansion valve 3 is also arranged in the refrigerant path for controlling the supply of refrigerant to the evaporator 2.

The vapour compression system 1 further comprises a number of temperature sensors. A first temperature sensor 4 is arranged in the refrigerant path after the outlet of the evaporator 2. Accordingly, the first temperature sensor 4 measures a temperature signal, $S_2$, which represents the temperature of refrigerant leaving the evaporator 2.

A second temperature sensor 5 is arranged in a secondary air flow across the evaporator 2, at a position before the air reaches the evaporator 2. Accordingly, the second temperature sensor 5 measures a temperature signal, $S_3$, which represents the temperature of air flowing towards the evaporator 2. It should be noted that, for the purpose of performing the method according to the invention, the second temperature sensor 5 could be omitted.

A third temperature sensor 6 is arranged in the secondary air flow across the evaporator 2, at a position after the air has passed the evaporator 2. Accordingly, the third temperature sensor 6 measures a temperature signal, $S_4$, which represents the temperature of air flowing away from the evaporator 2.

During a system identification phase, an opening degree of the expansion valve 3 is alternatingly increased and decreased. Simultaneously, the temperature signals, $S_2$ and $S_4$, are monitored and supplied to a reference temperature calculator 7. In the reference temperature calculator 7 a maximum temperature difference,

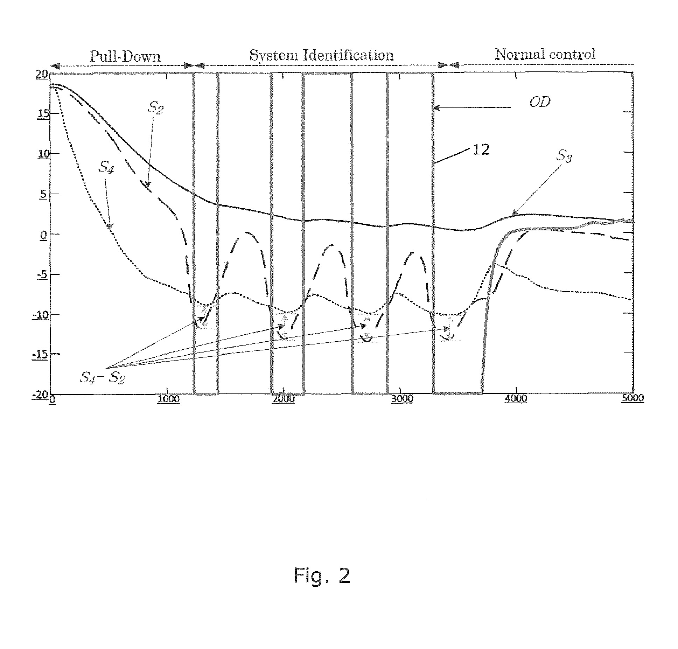

$(S_4-S_2)_{max}$, is determined, based on the measured temperature signals, $S_2$ and $S_4$. This will be described in further detail below with reference to Fig. 2. The reference temperature calculator 7 may, e.g., be or form part of a controller or a micro processor.

When the system identification phase has been completed, the temperature signal, $S_4$, is monitored and supplied to the reference temperature calculator 7. The reference temperature calculator 7 then calculates a reference temperature, $S_{2,ref}$, based on the monitored temperature, $S_4$, and the maximum temperature difference, $(S_4-S_2)_{max}$, which was determined during the system identification phase. The reference temperature, $S_{2,ref}$, may, e.g., be calculated as:

$$S_{2,ref} = \overline{S_4} - (S_4 - S_2)_{max} + \Delta,$$

where $\overline{S_4}$ is a mean value of $S_4$ obtained during a predefined previous time interval, and $\Delta$ is a constant safety value. The reference temperature, $S_{2,ref}$, calculated in this manner represents a temperature of refrigerant leaving the evaporator 2, which provides an optimum superheat of the refrigerant.

The calculated reference temperature, $S_{2,ref}$, is supplied to a proportional integral (PI) regulator 8. Furthermore, the temperature signal, $S_2$, is monitored and supplied to the PI regulator 8. Based thereon the PI regulator 8 generates a control signal for the expansion valve 3. In response to the control signal, the expansion valve 3 adjusts the opening degree, and thereby the supply of refrigerant to the evaporator 2, in order to obtain a temperature, $S_2$, of refrigerant leaving the evaporator 2, which is substantially equal to the calculated reference temperature, $S_{2,ref}$.

Furthermore, the temperature signals, $S_3$ and $S_4$, are supplied to a sensor selection unit 9. The sensor selection unit 9 selects whether to select one of the temperature signals, $S_3$ and $S_4$, as an air temperature, $T_{air}$, being representative for a temperature prevailing inside a refrigerated volume, or to select a weighted value of the two temperature signals, $S_3$ and $S_4$. The selection may, e.g., be based on the availability of sensors 5 and 6, or on the choice of the installer. Based on the selection, a temperature signal, $T_{air}$, is generated, and $T_{air}$ is supplied to an air tracking unit 10.

A reference air temperature, $T_{air,ref}$, is also supplied to the air tracking unit 10. The reference air temperature, $T_{air,ref}$, represents a reference or target temperature which is desired inside the refrigerated volume, i.e. in the air flowing across the evaporator 2.

The air tracking unit 10 compares the temperature signal, $T_{air}$, to the reference air temperature, $T_{air,ref}$, and generates a signal which is supplied to the PI regulator 8. The generated signal indicates how close the actual air temperature, $T_{air}$, is to the reference air temperature, $T_{air,ref}$. Thus, when the PI regulator 8 generates the control signal for the expansion valve 3, it takes into account that adjustments to the opening degree of the expansion valve 3 may also be required in order to obtain a desired temperature of the air flowing across the evaporator 2. Accordingly, the opening degree of the expansion valve 3, and thereby the supply of refrigerant to the evaporator 2, is controlled in order to obtain a reference temperature, $S_{2,ref}$, of refrigerant leaving the evaporator 2, as well as in order to obtain a reference temperature, $T_{air,ref}$, of air flowing across the evaporator 2, inside a refrigerated volume.

The vapour compression system 1 is further provided with safety logic 11 in order to detect possible errors or safety issues. For instance, the safety logic 11 may detect if there is a risk of flooding the evaporator 2, i.e. if the superheat value of refrigerant leaving the evaporator 2 is approaching zero.

Fig. 2 is a graph illustrating opening degree of an expansion valve and various temperature measurements during operation of a vapour compression system using a method according to an embodiment of the invention. The vapour compression system could, e.g., be the vapour compression system illustrated in Fig. 1.

The graph of Fig. 2 illustrates three different phases of control of the vapour compression system, i.e. a pull-down phase, a system identification phase, and a normal control phase.

Prior to the pull-down phase the vapour compression system has been inoperative for a period of time. Therefore all temperatures, $S_2$, $S_3$ and $S_4$, prevailing in the vapour compression system have equalized at substantially the same temperature level.

At initiation of the pull-down phase, the opening degree 12 of the expansion valve is set to a maximum value, in order to fill the evaporator as quickly as possible, thereby driving the measured temperatures downwards. The temperature signal, $S_2$, represents the temperature of refrigerant leaving the evaporator, the temperature signal, $S_3$, represents the temperature of air flowing towards the evaporator, and the temperature, $S_4$, represents the temperature of air flowing away from the evaporator, as described above with reference to Fig. 1.

It can be seen from Fig. 2 that, during the pull-down phase, the temperature, $S_4$, of air flowing away from the evaporator initially decreases faster than the other measured temperature, $S_2$ and $S_3$. This is due to the fact that the evaporator is cooling the air flowing across the evaporator in an efficient manner. The temperature, $S_3$, of air flowing towards the evaporator and the temperature, $S_2$, of refrigerant leaving the evaporator also decrease, but at a slower rate.

At a certain point in time the temperature, $S_2$, of refrigerant leaving the evaporator decreases drastically. This is an indication that liquid refrigerant is present throughout almost the entire length of the evaporator, and that a zero superheat situation is approaching. Accordingly, the pull-down phase is ended, and the system identification phase is initiated.

During the system identification phase the opening degree 12 of the expansion valve is alternately increased and decreased between a maximum value and a minimum value. Furthermore, the temperature signals, $S_2$, $S_3$ and $S_4$, are monitored.

It can be seen from Fig. 2 that the alternating increases and decreases of the opening degree 12 of the expansion valve results in significant decreases and increases of the temperature, $S_2$, of refrigerant leaving the evaporator. This is due to the fact that the evaporator is almost filled with liquid refrigerant, and variations in the opening degree 12 of the expansion valve, and thereby in the supply of refrigerant to the evaporator, thereby significantly affects the temperature, $S_2$, of refrigerant leaving the evaporator.

The temperature, $S_4$, of air flowing away from the evaporator also varies during the system identification phase, since the air is cooled by the evaporator, and the temperature, $S_4$, of air flowing away from the evaporator thereby depends on the evaporating temperature. However, the variations in the temperature, $S_4$, of air flowing away from the evaporator are smaller than the variations in the temperature, $S_2$, of refrigerant leaving the evaporator.

Finally, the temperature, $S_3$, of air flowing towards the evaporator simply continues to decrease during the system identification phase, with only insignificant variations.

For each period of increasing and decreasing the opening degree 12 of the expansion valve, the temperature difference, $(S_4-S_2)$, between the temperature, $S_2$, of refrigerant leaving the evaporator and the temperature, $S_4$, of air flowing away from the evaporator is monitored, and a largest value of the temperature difference is determined. Upon completion of the system identification phase a maximum temperature difference, $(S_4-S_2)_{max}$, is determined as the largest of the temperature differences, $(S_4-S_2)$, determined during the periods of increasing and decreasing the opening degree 12 of the expansion valve. The maximum temperature difference, $(S_4-S_2)_{max}$, is supplied to a reference temperature calculator, and used for calculating a reference temperature, $S_{2,ref}$, in the manner described above.

The maximum temperature difference, $(S_4-S_2)_{max}$, provides information regarding how far the temperature, $S_2$, of refrigerant leaving the evaporator is from an optimal superheat value, under the given circumstances, and thereby information regarding how much further the temperature, $S_2$, can be lowered without risking flooding of the evaporator, i.e. that liquid refrigerant is allowed to pass through the evaporator. A reference temperature, $S_{2,ref}$, for the refrigerant leaving the evaporator, which is calculated on the basis of the maximum temperature difference, $(S_4-S_2)_{max}$, thereby takes this information into account.

Finally, the normal control phase is initiated. During this phase the opening degree 12 of the expansion valve is controlled in order to obtain a temperature, $S_2$, of refrigerant leaving the evaporator, which is substantially equal to the reference temperature, $S_{2,ref}$. The reference temperature, $S_{2,ref}$, is continuously calculated, on the basis of the maximum temperature difference, $(S_4-S_2)_{max}$, which was determined during the system identification phase, and on the basis of the monitored temperature, $S_4$, of air flowing away from the evaporator.

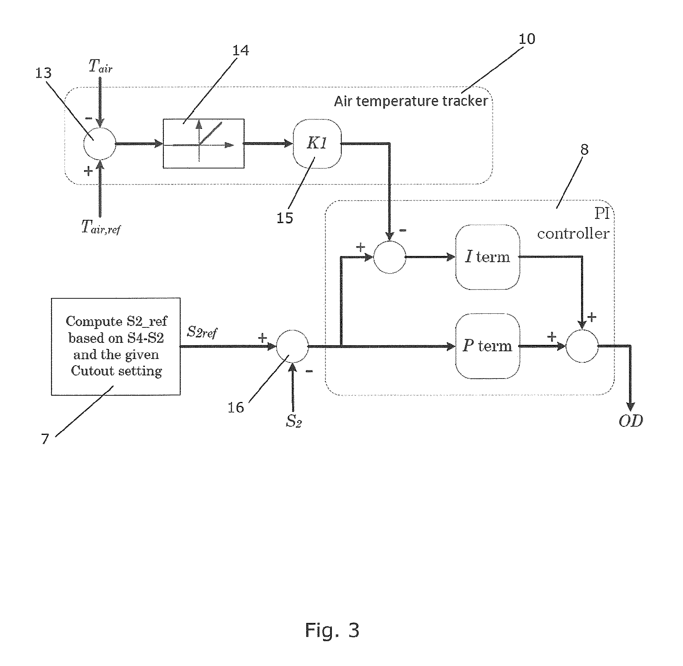

Fig. 3 is a block diagram illustrating a method according to an embodiment of the invention, e.g. for controlling the vapour compression system of Fig. 1.

An air temperature, $T_{air}$, and a reference air temperature, $T_{air,ref}$, are supplied to a comparator 13 of an air tracking unit 10, e.g. in the manner described above with reference to Fig. 1. The output of the comparator 13 is passed through a filter 14, and a gain 15 is applied to the signal before it is supplied from the air tracking unit 10 to an integral part of a proportional integral (PI) regulator 8.

Furthermore, a reference temperature calculator 7 calculates a reference temperature, $S_{2,ref}$, of the refrigerant leaving the evaporator. The reference temperature, $S_{2,ref}$, is calculated essentially in the manner described above, and is supplied to a comparator 16, where it is compared to a measured temperature, $S_2$, of refrigerant leaving the evaporator.

The output of the comparator 16 is supplied to the PI regulator 8. Based on the input received from the air tracking unit 10 and the reference temperature calculator 7, the PI regulator 8 generates a control signal for an expansion valve, in order to control the opening degree of the expansion valve in such a manner that the temperature, $S_2$, of refrigerant leaving the evaporator is substantially equal to the calculated reference temperature, $S_{2,ref}$, and in such a manner that an air temperature, $T_{air}$, which is equal to the reference air temperature, $T_{air,ref}$, is obtained. The input received from the air tracking unit 10 ensures that the opening degree of the expansion valve is controlled in a smooth manner.

**Claims**

1. A method for controlling a supply of refrigerant to an evaporator (2) of a vapour compression system (1), the vapour compression system (1) comprising at least one evaporator (2), at least one compressor, at least one condenser and at least one expansion valve (3) arranged in a refrigerant path, the method comprising the steps of:

   - initiating a system identification phase, in which an opening degree (12) of the expansion valve (3) is alternately increased and decreased,
   - during the system identification phase, monitoring a temperature, $S_2$, of refrigerant leaving the evaporator (2), and a temperature, $S_4$, of air flowing across the evaporator (2), at a position where the air is flowing away from the evaporator (2), and determining a maximum temperature difference, $(S_4-S_2)_{max}$, between the monitored temperatures,
- upon completion of the system identification phase, controlling a supply of refrigerant to the evaporator (2) by:

> - monitoring the temperature, $S_2$, of refrigerant leaving the evaporator (2), and the temperature, $S_4$, of air flowing away from the evaporator (2),
> - calculating a reference temperature, $S_{2,ref}$, based on the monitored temperature, $S_4$, of air flowing away from the evaporator (2) and the maximum temperature difference, $(S_4-S_2)_{max}$, determined during the system identification phase, and
> - controlling the supply of refrigerant to the evaporator (2), based on the calculated reference temperature, $S_{2,ref}$, and in order to obtain a temperature, $S_2$, of refrigerant leaving the evaporator (2) which is substantially equal to the calculated reference temperature, $S_{2,ref}$.

2.  A method according to claim 1, wherein the step of calculating a reference temperature, $S_{2,ref}$ comprises calculating a mean temperature, $\overline{S_4}$, of the temperature, $S_4$, of air flowing away from the evaporator (2), during a predefined previous time interval.

3.  A method according to claim 2, wherein the reference temperature, $S_{2,ref}$, is calculated as:

$$S_{2,ref} = \overline{S_4} - (S_4 - S_2)_{max} + \Delta,$$

wherein $\Delta$ is a constant safety value.

4.  A method according to any of the preceding claims, wherein the step of controlling the supply of refrigerant to the evaporator (2) is performed using a proportional integral (PI) regulator (8).

5.  A method according to claim 4, further comprising the steps of, during the system identification phase, determining one or more system dynamic parameters, supplying the system dynamic parameters to the proportional integral (PI) regulator (8), and designing the proportional integral (PI) regulator (8) in accordance with the system dynamic parameters.

6.  A method according to any of the preceding claims, wherein the step of controlling the supply of refrigerant to the evaporator (2) further comprises the steps of:

> - obtaining an air temperature, $T_{air}$, of an air flow across the evaporator (2),
> - comparing the obtained air temperature, $T_{air}$, to a reference value, $T_{air,ref}$, and
> - controlling the supply of refrigerant to the evaporator (2) on the basis of the comparing step, as well as on the basis of the calculated reference temperature, $S_{2,ref}$.

Fig. 1

Fig. 2

Fig. 3

Europäisches
Patentamt

European
Patent Office

Office européen
des brevets

# EUROPEAN SEARCH REPORT

**Application Number**

EP 14 19 7575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/080436 A1 (CARRIER CORP [US]; HEINBOKEL BERND [DE]) 10 July 2008 (2008-07-10) | 1,4,5 | INV. F25B49/02 |
| A | * page 4, line 30 - page 11, line 15; figures 1-3 * | 2,3,6 | |
| A | WO 2009/039850 A1 (DANFOSS AS [DK]; ALNOR HARALD [DK]; BENDTSEN CHRISTIAN [DK]) 2 April 2009 (2009-04-02) * page 16 - page 22; figures 1-5 * | 1-6 | |
| A | WO 2014/063707 A1 (DANFOSS AS [DK]) 1 May 2014 (2014-05-01) * page 2, line 7 - page 14, line 23; figures 1-3 * | 1-6 | |

**TECHNICAL FIELDS SEARCHED (IPC)**

F25B

The present search report has been drawn up for all claims

| Place of search | Date of completion of the search | Examiner |
|---|---|---|
| Munich | 19 May 2015 | Szilagyi, Barnabas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 19 7575

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2015

| Patent document cited in search report | | Publication date | Patent family member(s) | | Publication date |
|---|---|---|---|---|---|
| WO 2008080436 | A1 | 10-07-2008 | EP<br>WO | 2104810 A1<br>2008080436 A1 | 30-09-2009<br>10-07-2008 |
| WO 2009039850 | A1 | 02-04-2009 | NONE | | |
| WO 2014063707 | A1 | 01-05-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012052019 A1